## Europäisches Patentamt

## European Patent Office

## Office européen des brevets

(19)

(11) Veröffentlichungsnummer: **0 005 714**
**B1**

(12)

# EUROPÄISCHE PATENTSCHRIFT

(45) Veröffentlichungstag der Patentschrift: **11.11.81**

(51) Int. Cl.³: **F 23 D 1/02**

(21) Anmeldenummer: **79101065.5**

(22) Anmeldetag: **07.04.79**

(54) Topfbrenner zur Verfeuerung von Kohlenstaub.

(30) Priorität: **18.04.78 DE 2816768**

(43) Veröffentlichungstag der Anmeldung:
**12.12.79 Patentblatt 79/25**

(45) Bekanntmachung des Hinweises auf die Patenterteilung:
**11.11.81 Patentblatt 81/45**

(84) Benannte Vertragsstaaten:
**BE DE FR GB NL**

(56) Entgegenhaltungen:
CH - A - 296 883
DE - A - 2 424 053
DE - C - 573 049
FR - A - 1 347 777
FR - A - 2 316 537
GB - A - 264 563
GB - A - 297 240
GB - A - 325 517
GB - A - 329 963
GB - A - 372 429
GB - A - 783 253
GB - A - 870 553
GB - A - 893 739
US - A - 1 703 814
US - A - 1 858 450
US - A - 2 222 756
US - A - 2 646 376
US - A - 3 140 675

(73) Patentinhaber: **Ruhrkohle Aktiengesellschaft**
**Rellinghauser Strasse 1**
**D-4300 Essen 1 (DE)**

(72) Erfinder: **Brücker, Werner, Dr. Ing.**
**Pfalzstrasse 17 a**
**Düsseldorf (DE)**
Erfinder: **Greulich, Horst Siegfried, Ing. grad.**
**Bermaensfeld 195**
**Oberhausen (DE)**
Erfinder: **Jacobs, Jörn, Dr. Ing.**
**Waldsaum 59**
**Essen (DE)**
Erfinder: **Schlütter, Alois, Dipl.-Ing.**
**Rheinstrasse 42**
**Kempen (DE)**
Erfinder: **Schmalfeld, Jörg, Dr. Ing.**
**Merianstrasse 6**
**D-6242 Kronberg (DE)**

Courier Press, Leamington Spa, England.

# 0 005 714

## Topfbrenner zur Verfeuerung von Kohlenstaub

Die Erfindung betrifft einen Topfbrenner zur Verfeuerung von Kohlenstaub in einem mit keramischer Masse ausgekleideten, topfförmigen Brennraum und mit zentrischer, geradliniger Staubeinblasung und konzentrischer Luftzuführung, wobei die Luft beim Durchströmen des Brennraummantels vorgewärmt wird und in den Brennraum verdrallt eintritt.

Solche Topfbrenner sind aus der DE—B—10 33 357 bekannt. Bei derartigen Topfbrennern war man bisher bemüht, die Flamme von der keramischen Auskleidung fernzuhalten, um zu verhindern, daß geschmolzene Asche in das keramische Material eindringt. Diese Vorsichtsmaßnahmen beschränken den Verbrennungsvorgang erheblich. Darauf ist zurückzuführen, daß auch in Topfbrennern nach der DE—B—10 33 357 Schwierigkeiten beim Einleiten des Verbrennungsprozesses mit Kohlenentstehen, die einen geringen Gasanteil haben und deshalb eine geringe Zündfähigkeit aufweisen. Beim Einsatz von Kohlenstaub aus Mager- und Anthrazitkohlen wird et üblicherweise zusätzlich Propangas und/oder Leichtöl als Zusatzbrennstoff eingesetzt. In der Energiebilanz ist dann Kohlenstaub mit etwa 70%, Leichtöl mit etwa 26% und Propangas mit etwa 4% beteiligt. Wirtschaftlich ist diese Verbrennung insbesondere wegen des Propangasanteiles relativ ungünstig.

Der Erfindung liegt daher Aufgabe zugrunde, eine Verbrennung feingemahlener, auch gering zündfähiger Kohle bei Brennern der eingangs genannten Art Sicherzustellen.

Die Verbrennung von Magerkohlen in einem keramischen Topfbrenner ohne Stützflamme und ohne Gefahr der Bildung von Schlackenpelz am Brennraummantel wird nach der Erfindung dadurch ermöglicht daß zur Erzeugung einer Brennerleistung von 0,5—10,0 MW Anthrazit mit einer Korngröße von maximal 0,05 mm oder Kokskohle von maximal 0,15 mm mit einem Wassergehalt von höchstens 2% eingesetzt wird, daß die Magerkohle beim Eintritt eine Vorwärmung von 100—200° C aufweist, daß die Verbrennung unterhalb des Schlackenerweichungspunktes erfolgt und daß Luft um den Kohlenstaub-Luft-Strahl spiralförmig herum geblasen wird.

In der Zeichnung ist ein Ausführungsbeispiel der Erfindung dargestellt. Es zeigen:

Fig. 1 eine schematische Gesamtansicht eines Brenners,

Fig. 2 und 3 Einzelheiten des Brenners nach Fig. 1,

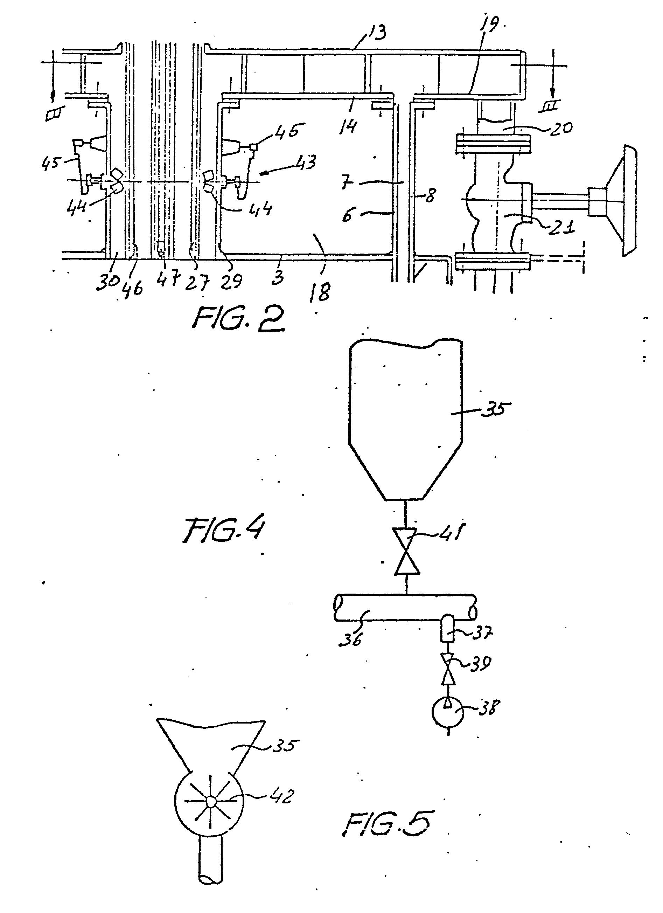

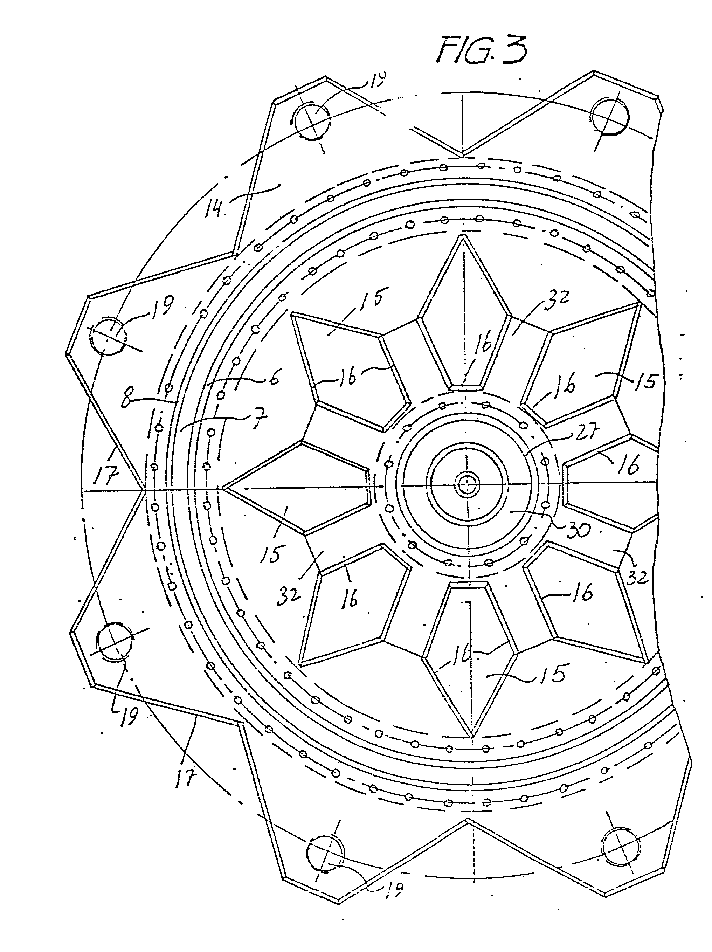

Fig. 4 und 5 eine Kohlezuführung für den Brenner nach Fig. 1—3.

Der dargestellte Brenner besitzt eine Leistung von 5 MW. Das liegt in der Mitte des für derartige Brenner vorgesehenen Leistungsbereiches von 0,5—10 MW.

Der Brenner besitzt einen zylindrischen, doppelwandigen Stahlmantel 1, dessen eines Ende 2 offen und dessen anderes Ende 3 geschlossen ist. Am oberen Ende 3 ist der doppelwandige Stahlmantel 1 mit zwei Stutzen 4 für die Zuführung von Kaltluft versehen. Die Kaltluft soll im Betriebsfall durch die Sutzen 4 in den Stahlmantel 1 eintreten und zunächst am äußeren Mantel 5 entlang bis zum unteren Ende 2 und dann am inneren Mantel 6 entlang zu einem Austrittsstutzen 7 strömen. Dabei verhindert ein Führungsblech 8 zwischen dem inneren Mantel 5 und dem äußeren Mantel 6 einen Kurzschlußstrom von den Stutzen 4 in den Austrittsstutzen 7. Neben dem Führungsblech 8 befinden sich noch Leitbleche 9 und 10 in dem doppelwandigen Stahlmantel 1. Das Leitblech 9 verläuft spiralförmig entlang der Innenseite des äußeren Mantels 6 und ist an dem Mantel 6 befestigt. Das Leitblech 10 verläuft gleichfalls spiralförmig, aber entlang der Innenseite des Führungsbleches 8. Das Leitblech 10 ist auch an dem Führungsblech 8 befestigt. Die Leitbleche 9 und 10 geben der durch den doppelwandigen Stahlmantel 1 strömenden Luft eine spiralförmige Strömung. Eine entgegengesetzte Steigung beider Leitbleche 9 und 10 erlaubt eine gleichbleibende Drallrichtung der Luftströmung zwischen dem äußeren Mantel 6 und dem Führungsblech 8 bzw. dem inneren Mantel 5 und dem Führungsblech 8. Eine Umkehrung der Drallrichtung wäre mit einem erheblichen Strömungsverlust verbunden. Die Leitbleche 9 und 10 bilden eingängige Spiralen, sie können aber auch als mehrgängige Spiralen ausgebildet sein.

Der Austrittsstutzen 7 resultiert aus einer Verlängerung des inneren Mantels 5 und des Führungsbleches 8 über das obere Ende 3 hinaus.

Der Stahlmantel bildet mit den Stutzen 4, den Mänteln 5 und 6, dem Austrittsstutzen 7, dem Führungsblech 8 und den Leitblechen 9 und 10 eine Schweißkonstruktion. Innen ist der Stahlmantel 1 mit einer keramischen Auskleidung 11 versehen. Der von der keramischen Auskleidung 11 umschlossene, bis auf das obere Ende zylindrische Hohlraum ist der Flammenraum. Die keramische Auskleidung besteht teilweise aus Aluminiumoxyd bzw. Siliziumkarbit.

Der sich aus dem Stahlmantel 1 und der keramischen Auskleidung 11 ergebende Brennerdurchmesser beträgt 1200 mm, gleichzeitig hat der Brenner eine Länge von 2000 mm. Dadurch ergibt sich ein Verhältnis der Brennerleistung von 0,5 MW pro $m^3$ Flammenraum. Dieser Wert liegt innerhalb des zulässigen Bereiches von 0,3 bis 0,7 MW pro $m^3$. Der Bereich kennzeichnet eine relativ geringe Feuerraumbelastung und hat ein stabiles Feuerungsverhalten zur Folge. Ein instabiles Feuerungsverhalten stellt sich mit einiger Sicherheit bei einer Belastung von 2 MW/$m^3$ und mehr ein. Alle in diesem Zusammenhang genannten Feuerraumbelastungen sind auf 1 bar und 1 Stunde bezogen.

Im Betriebsfall bewirkt die durch den Stahlmantel 1 strömende Kaltluft eine bestimmte Kühlung. Diese Kühlung kann auch mit Hilfe einer Wasserkühlung oder einer anderen Kühlung mit einem flüs-

2

sigen Kühlmittel erreicht werden. Die nach Durchströmen des Stahlmantels 1 aus dem Austrittsstuzen 7 austretende Luft gelangt in eine Verteilerdecke 12.

Die Verteilerdecke 12 mündet in Rohrstutzen 20. Jeder Rohrstutzen 20 setzt sich über ein zwischengeschaltetes Stellventil 21 in einer Rohrleitung 22 fort. Stellventile sind für Brenner mit variablem Betrieb vorgesehen. Bei konstantem Betrieb erfolgt die Luftverteilung durch festgelegte Strömungsquerschnitte. Alle Rohrleitungen 22 sind außen am Stahlmantel 1 entlanggeführt und besitzen an dem der Verteilerdecke 12 abgewandten vorderen Ende einen Krümmer 23, der in einer Düse 24 genau vor dem unteren Ende 2 des Stahlmantels 1 mündet. Die Düsen 24 sind unter dem Winkel von 70° zu Längsachse des Stahlmantels 1 radial gegena die Längsachse gerichtet. Der Winkel von 70° liegt innerhalb eines zulässigen Winkelbereiches von 60 bis 80°. Wenn die Düsen 24 genau auf die Längs- und Mittelachse des Stahlmantels 1 zeigen, ist der Winkel zwischen der Düsenmittelachse und dem durch die Mittel- und Längsachse des Stahlmantels 1 und die Düsenmitte gehenden Radius 0°. Im Bedarfsfall können die Düsen 24 aber auch an der Längs- und Mittelachse des Stahlmantels 1 vorbeizeigen. Dabei ist ein Winkel von 30° zwischen der Düsenmittelachse und dem die Düsenmitte schneidenden Radius noch zulässig. Die Rohrleitungen 22 sind durch Stege 25 und einem Brennerflansch 26, der zugleich den Stahlmantel 1 umschließt, am Stahlmantel 1 gehalten. Mit dem Brennerflansch 26 wird der Brenner an einem nicht dargestellten Kessel montiert. Dann ragt er mit seinem vorderen Ende 2 bis zum Brennerflansch 26 in den Feuerungsraum des Kessels. Im Unterschied zu anderen Brennern, herkömmlichen Front- oder Deckenbrenner, deren Brennstoffeintritt im wesentlichen mit der Kesselwandung in einer Ebene liegt, besitzt der erfindungsgemäße Brenner innerhalb des Stahlmantels 1 und der keramischen Auskleidung 11 einen gegenüber dem übrigen Feuerungsraum des Kessels abgeschlossenen, geschützten Flammenraum oder Flammentunnel.

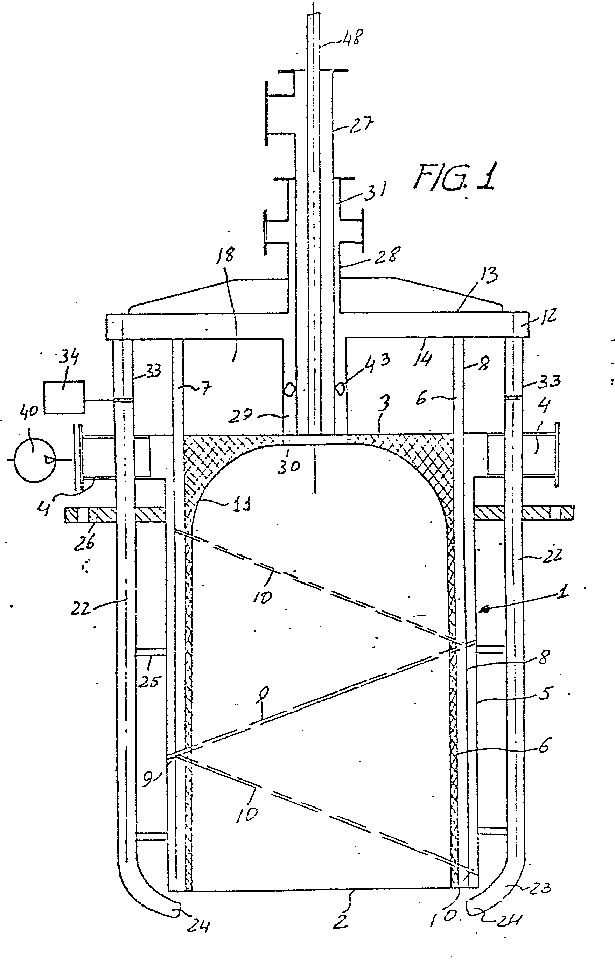

Bei dem Brenner nach Fig. 1 bis 3 wird der Brennstoff in Form eines Staub/Luft-Gemisches durch eine zentrische, am oberen Ende des Stahlmantels 1 mündende Rohrleitung 27 in den Flammenraum eingetragen. Die Rohrleitung 27 wird oberhalb der Verteilerdecke 12 im Abstand von einer weiteren, mit der Verteilerdecke 12 verschweißten Rohrleitung 28 umgeben. Unterhalb der Verteilerdecke 12 ist die Rohrleitung 27 in noch größerem Abstand von einer dritten, mit dem oberen Ende 3 des Stahlmantels 1 verschweißten Rohrleitung 29 umgeben. Zwischen den Rohrleitungen 27 und 29 besteht dadurch eine in den Flammenraum führende und mit der Verteilerdecke 12 verbundene Ringleitung 30. Oberhalb der Verteilerdecke 12 besteht gleichfalls eine mit 31 bezeichnete Ringleitung. Die Ringleitung 31 wird durch die Rohrleitungen 27 und 28 gebildet und ist wie die Ringleitung 30 mit der Verteilerdecke 12 verbunden. Das heißt, die aus dem Austrittsstutzen 7 austretene Luft wird durch die Verteilerdecke 12 in verschiedener Weise aufgeteilt. Sie gelangt in die in Düsen 24 mündenden Rohrleitungen 22, die Ringleitung 30 und die Ringleitung 31. Die Zuführung von Luft in die Ringleitungen 30 und 31 wird dadurch erleichtert, daß die Ausnehmungen 15 jeweils so in der Verteilerdecke angeordnet sind, daß die mit 32 bezeichneten Durchtrittsöffnungen zwischen zwei benachbarten Ausnehmungen 15 jeweils einer Durchtrittsbohrung 19 gegenüberliegen und die Stege 16 der Ausnehmungen 15 einem Trichter bilden. Es liegen sich dann die su den Durchtrittsbohrungen 19 und den Durchtrittsöffnungen 32 gehörenden Trichter, wie in Fig. 3 dargestellt, jeweils genau genenüber, so daß die aus dem Austrittsstutzen 7 austretene Luft optimal in die Durchtrittsbohrungen 19 und die Durchtrittsöffnungen 32 geleitet wird.

In der Verteilerdecke 12 findet eine Verteilung in bestimmten Verhältnissen statt. 10 bis 30% der am Austrittsstutzen 7 anfallenden Luftmenge gelangt in die Ringleitung 31, 25 bis 50% dieser Gesamtluftmenge gelangt in die zu den Düsen 24 führenden Rohrleitungen 22. Der Rest tritt durch die Ringleitung 30 in den Flammenraum ein. Diese Verteilung läßt sich durch Regelglieder in den verschiedenen Leitungen durch Klappen und/oder Ventile, wie sie beispielsweise mit den Stellventilen 21 vorgesehen sind, regeln. Der Rengelbereich soll jedoch möglichst klein sein, um die mit großen Regelbereichen einhergehenden und aus konstruktiven Gründen resultierenden Strömungsverluste gering zu halten. Deshalb ist eine max. Regelbereich von 1 zu 2,5 vorgesehen. Außerdem soll die Regelung des Luftstromes nach Fig. 1 bis 3 möglichst in einem Leitungsbereich, an den Stellventilen 21 der Rohrleitungen 22, stattfinden. Die Regelung erfolgt nach Messung der Durchtrittsgeschwindigkeit in den Rohrleitungen 22. Dazu sind Meßblenden 33 in die Rohrleitungen 22 eingebaut. Die Meßblenden 33 stehen mit Anzeigevorrichtungen 34 in Wirkverbindung. Anhand der angezeigten Werte werden bei Abweichung von vorgegebenen Sollwerten die Stellventile 21 von Hand nachgeregelt. Im übrigen sollen die Stellventile wie alle anderen ggf. vorgesehenen Ventile und Klappen zur Luftregelung sowohl während des eigentlichen Brennerbetriebes als auch während des Anfahrbetriebas konstant bleiben. Im Ausführungsbeispiel soll die Geschwindigkeit in den Rohrleitungen 22 bei Verbrennung von Anthrazitstaub in einer Menge von 600 kg/h 80 m/Sek. betragen. Diese Geschwindigkeit entspricht einem Luftmengenanteil von 35% an der Gesamtluftmenge. Bei einem Luftmengenantail von 15% in der Ringleitung 31 und 50% in der Ringleitung 30 sind Luftgeschwindigkeiten von 15 m/Sek. in der Rohrleitung 27 und 50 m/Sek. in der Ringleitung 30 vorgesehen. Das liegt in den als vorteilhaft ermittelten Bereichen von 10 bis 20 m/Sek. in der Rohrleitung 27 und dem zwei- bis vierfachen dieser Geschwindigkeit in der Ringleitung 30 und dem fünf- bis siebenfachen dieser Geschwindigkeit in den Rohrleitungen 22. Die max. Luftgeschwindigkeit liegt damit etwa bei 100 m/Sek.

Die Temperatur der in die Verteilerdecke 12 tretenden Luft liegt bei einem Brennerbetrieb dicht

3

**0 005 714**

unterhalb der höchst zulässigen Brennertemperatur von 1350° C nach einer Eintrittstemperatur von 20° C in der Größenordnung von 400°C. Mit dieser Temperatur strömt die warme Luft durch die Ringleitung 31 in Rohrleitungen 36, die zu Bunkern 35 führen. Die Rohrleitungen 36 sind an seitlich an der Rohrleitung 28 angeschweißten Flanschen befestigt. Die in die Rohrleitungen 36 strömende Luft ist als Primärluft zu bezeichnen. Dieser 400° C warmen Primärluft wird vor Erreichen jedes Bunkers 35 20° C warme Primärluft im Verhältnis 70 zu 30 beigemischt, wobei die 20° C warme Primärluft den größeren Anteil stellt. Die 20° warme Primärluft wird mit einem Gebläse 38 über ein Regelventil 39 und einen Stutzen 37 in die jeweilige Rohrleitung 36 geblasen. Mit dem Regelventil 39 wird der jeweils notwendige Kaltluftanteil singestellt. Das Gebläse 38 gewährleistet eine ausreichende Luftversorgung. Das heißt, die Lufteinspeisung erfolgt zwangsweise abenso wie in die Stutzen 4 des Stahlmantels 1. In Fig. 1 ist das dem Stutzen 4 zugehörende Gebläse 40 schematisch dargestellt. Wahlweise kann anstelle der verschiedenen Gabläse 38 und 40 auch ein gemeinsames Gebläse mit einer geeigneten, nachgeschalteten Luftverteilung eingesetzt werden.

Durch die Zuführung von niedrig temperierter Luft in die Rohrleitung 36 wird die 400°gcv warme Primärluft soweit herabgekühlt, daß sie beim Zusammentreffen mit aus den Bunkern 35 über eine Regelvorrichtung 41 in die Rohrleitung 36 gelangendem Kohlenstaub eine unterhalb der Zündtemperatur des Kohlenstaubes liegende Temperatur erreicht hat. Diese Temperatur soll dicht oberhalb der gewünschten Eintrittstemperatur des Kohlestaub/Luftgemisches in die Rohrleitung 27 liegen. Das wird durch einen Wärmeverlust verhindernden geringen Abstand der Kohlebunker 35 von der Rohrleitung 27 und/oder durch eine Wärmedämmung der Rohrleitung 36 erreicht. Die Austrittstemperatur aus der in gleicher Weise an der Rohrleitung 27 wie an der Rohrleitung 28 befestigten Rohrleitung 36 bzw. die Eintrittstemperatur des Kohlestaub/Luftgemisches in die Rohrleitung 27 beträgt 160°C und liegt innerhalb des zulässigen Bereiches zwischen 100 und 200°C.

Die Regelvorrichtung 41 bewirkt die Dosierung des Brennstoffvorrates aus dem Tagesbunker in die Rohrleitung 36.

Sie wird auf einen etwa 900 g/m³ entsprechenden Staubsättigungsgrad des Kohlestaub/Luftgemisches eingeregelt.

Das aus der Rohrleitung 27 in den Flammenraum austretene Kohlestaub/Luftgemisch wird von einem ringförmigen, aus der Ringleitung 30 austretenden und im folgenden als Sekundärluft bezeichneten Luftstrom umgeben. Die Sekundärluft ist wie die in die Ringleitung 31 strömende Luft 400°C warm und wird mit einem Drallapparat 43 in eine spiralförmige Bewegungsbahn un den austretenden Kohlenstaub/Luftstrom versetzt. Der Drallapparat 43 besteht aus einer Anzahl gleichmäßig in der Ringleitung 30 verteilt angeordneter, schwenkbar in den Rohrleitungen 27 und 29 gelagerten Leitblechen 44 und einer Arretierung 45. Die Leitbleche 44 haben eine dem ringförmigen Querschnitt der Ringleitung 30 angepaßte Form und können derart verschwenkt werden, daß die Sekundärluft in der Ringleitung 33 je nach Einstellung eine Verdrallung von 10° bis 80° erfährt. Dabei ist es vorteilhaft, einen möglichst kleinen Regelbereich für die Leitbleche 44 zu wählen, damit die Leitbleche 44 die Ringleitung 30 möglichst Schließend ausfüllen.

Der aus der Rohrleitung 27 austretende Kohlestaub/Luftstrom, der zusätzlich durch gleichmäßig verteilt an der Innenseite der Rohrleitung 27 angeordnete und in Rohrlängsrichtung verlaufende Leitbleche 46 gerichtet ist, ist gradlinig und drallfrei. Dagegen bewegt sich der aus der Ringleitung 30 austretene Sekundärluftstrom entsprechend der Einstellung des Drallapparates mit einer mehr oder weniger großen Verdrallung. Betrachtet man den Sekundärluftstrom und den Kohlestaub/Luftstrom als Gesamtstrom, so beträgt der verdrallte Anteil mindestens 30% und höchstens 90%. Diese Verdrallung kann auch in anderer Weise, z. B. ohne Verdrallung des Sekundärluftstromes durch Verdrallung des Kohlestaub/Luftgemisches herbeigeführt werden. Bei der im Ausführungsbeispiel gewählten Lösung ergeben sich jedoch besonders günstige Verhältnisse. Durch die verdrallte Sekundärluft werden die leichteren Partikel des Kohlestaub/Luftstromes gleichfalls in eine stark spiralförmige Bahn gebracht, während der Einfluß auf die schweren Kohlestaubpartikel geringer ist. Die leichteren Kohlestaubpartikel werden bei ihrer stark spiralförmigen Bahn infolge der wirksam werdenden Zentrifugalkraft nach außen in die Nähe der keramischen Auskleidung 11 gebracht. In der Nähe der keramischen Auskleidung 11 sind die Kohlestaubpartikel besonders stark der Wärme ausgesetzt, die sich dort währand des Verbrennungsvorganges gesammelt hat. Das fördert ein Entflammen der Kohlestaubpartikel, wenn die Flamme von dem Brennstoffeintritt in den Flammenraum abgerissen ist. Diese Wirkung ergänzt sich mit der aus der längeren Verweilzeit brennender Kohlestaubpartikel in dem Flammenraum resultierenden Wirkung und der Vorwärmung der Kohle. Infolge der längeren Verweilzeit besteht einige Sicherheit, daß die Flamme in dem Flammenraum des Stahlmantels 1 und der Auskleidung 11 nicht ganz erlischt, wenn es zu einem Abreißen der Flamme von dem Brennstoffeintritt kommt. Ein solches Abreißen kann beispielsweise durch eine Störung des Brennstoffzuflusses verursacht werden. Dann schlägt die sich noch in dem Flammenraum befindende Restflamme auf den Brennstoffeintritt zurück. Die vorteilhafte Wirkung der Verweilzeit nimmt mit der Dauer zu. Die Dauer der Verweilzeit hängt von dem Drallwinkel des Sekundärluftstromes ab. Andererseits verursacht ein starker Drallwinkel einen erheblichen Strömungsverlust. Daher ist die Verweilzeit mit den sich aus den Strömungsverlusten ergebenden Nachteilen zu optimieren.

Neben der Verweilzeit und der Wärmewirkung der Auskleidung, die im Hinblick auf die Einhaltung

4

der Betriebstemperatur von etwa 1350°C ein bestimmtes Maß nicht überschreiten darf und deshalb mit einer zwischen 200 und 300 Watt pro m² und Grad Kelvin Liegenden Kühlleistung mit der durch den Stahlmantel 1 strömenden Kaltluft gekühlt, wird, trägt die durch die warme Primärluft bewirkte gleichmäßige Vorwärmung des Brennstoffes dadurch zur Verbrennung bei, daß ladiglich noch eine relativ geringe Erwärmung erforderlich ist, um der Kohle die Zündtemperatur zu geben.

In dem Flammenraum findet die erste Stufe eines zweistufigen Verbrennungsvorganges statt. Diese erste Stufe ist durch Einstellung der Sekundärluft und Primärluft bzw. des zugeführten Kohlestaub/Luftgemisches, sowie durch die Verdrallung der Sekundärluft festgelegt. D. h. die Verdrallung und die Verweilzeit sind dieser Verbrennungsstufe anzupassen. In der ersten Verbrennungsstufe soll bis zum Austritt des Stahlmanteile 1 und der Auskleidung 11 ein Ausbrand von $\alpha = 0{,}4\text{—}0{,}8$ stattfinden. $\alpha = 1$ würde einer 100 %igen Verbrennung entsprechen. Im Ausführungsbeispiel ist eine Ausbrand an der oberen, zulässigen Grenze gewählt. Dieser Ausbrand wird durch eine unterstöchiometrische Verbrennung erraicht. Im Falle einer solchen Verbrennung wird nicht der entsprechend dem Molekularvarhältnis des Brennstoffes notwendige Sauerstoff beigebracht. Dadurch tritt eine unvollständige Verbrennung ein, denn die Kohlestaubpartikel verbrennen nicht nacheinander, sondern alle gleichmäßig. Es entsteht eine verzögerte Verbrennung, die eine Stickoxydbildung ($NO_x$) unterdrückt.

In der ersten Verbrennungsstufe tritt infolge der 1350°C nicht überschreitenden Verbrennungstemperatur keine flüssige Schmelze auf. Es findet ein trockener Verbrennungsvorgang statt. Die teilweise verbrannten Kohlestaubpartikel sind weich. Die teilweise ausgebrannten, weichen Kohlepartikel verursachen gegenüber geschmolzenen und erstarrten Schlackenpartikeln eine sehr viel geringere Erosion and der Auskleidung des Brenners.

In der zweiten Stufe wird außerhalb des von dem Stahlmantel 1 und der Auskleidung 11 umschlossenen Raumes durch die Rohrleitungen 22 Tertiärluft zugeführt. Mit der Tertiärluft solleine überstöchiometrische Verbrennung stattfinden, d.h. es soll ein Luftüberschuß erzeugt werden. Bei diesem Luftüberschuß ist eine wirtschaftliche Optimierung zwischen dem minimal zur vollständigen Verbrennung der Kohlepartikel notwendigen Luftstrom und einer vorteilhaften Wirkung eines starken Luftüberschusses bei einer nachfolgenden Wärmegewinnung durch in den Abgasstrom geschaltete Wärmetauscher zu treffen. Während ein Übermaß an Rauchgas die Wärmegewinnung mit den nachgeschalteten Wärmetauschern erleichtert, erschwert sich die Bereitstellung der zur Erzeugung der gewünschten Rauchgasmenge notwendige Luftmenge mit größer werdender Menge. Diese Erschwernisse resultieren u. a. aus den mit zunehmender Strömungsgeschwindigkeit überproportional wachsenden Strömungswiderständen. Das gilt insbesondere für die Strömungsverhältnisse in dem Stahlmantel 1, die u. a. durch die Durchflußquerschnitte und das durch die Steigung der Leitfläche 9 und 10 bestimmte Maß der Luftumlenkung bestimmt werden, wobei zu berücksichtigen ist, daß die Luft mit abnehmender Steigung bei gleichbleibender Strömungsgeschwindigkeit eine längere Verweilzeit in dem Stahlmantel 1 hat und dadurch eine zunehmende Erwärmung erfährt. Im übrigen dienen die Leitbleche dazu, der Luft eine Zwangsführung zu allen Umfangsstellen des Stahlmantels zu geben, um punktuelle oder streifenförmige Überhitzungen zu verhindern.

Mit Hilfe der Düsen 24 und eines ggf. unterschiedlich gestalteten Tertiärluftstromes kann die Flamme vor dem Stahlmantel 1 in beliebiger Weise der Geometrie des zugehörenden Kessels angepaßt werden. Anpassung heißt beispielsweise Verlängerung oder Verbreiterung oder Umlenkung.

• Sofern die Düsen 24 an der Längs- und Mittelachse des Stahlmantels 1 vorbeizeigen, ist vorgesehen, daß die austretende Tertiärluft in Bewegungsrichtung und nicht entgegen der Bewegungsrichtung des aus dem Stahlmantel 1 austretenden, spiralförmig umlaufenden Staub/Luftgemisches in dieses eintritt. Damit wird eine Vernichtung von Bewegungsenergie vermieden. Gleichwohl findet eine zur vollständigen Verbrennung der Kohlepartikel ausreichende Vermischung mit dem Tertiärluftstrom statt.

Im Ausführungsbeispiel wird Anthrazitstaub in einer Mange von 600 kg/Stunde eingesetzt. Der Anthrazitstaub hat einen Heizwert von 30.000 GJ/kg. Seine Mahlfeinheit ist zu 95% kleiner als 0,02 mm. Das ist weit unterhalb des zulässigen Bereiches von 0.05 mm. Der Anteil flüchtiger Bestandteile des Anthrazitstaubes ist 8% in rohem Zustand. Der Wassergehalt ist 1%, gleichfalls bezogen auf den Rohzustand und damit halb so groß wie der zulässige Wassergehalt. Der Aschegehalt beträgt 15%. Damit handelt es sich um übliche, reaktionsträge Anthrazitkohle, deren Zündtemperatur in Abhängigkeit vom Anteil flüchtiger Bestandteile bei ca. 400°C liegt. Statt der Anthrazitkohle können auch beliebige andere Magerkohlen eingesetzt werden, deren Stoffwerte dem Anthrazit entsprechend angepaßt wurden.

Zum Inbetriebsetzen des Brenners mit der vorgesehenen Anthrazitkohle wird eine Zündbrenner 47 durch ein zentrisch in der Rohrleitung 27 angeordnetes Rohr 48 in den Flammenraum geschoben. Der Zündbrenner ist als Öl- oder Gasbrenner ausgebildet und besitzt eine Zündleistung von 10% der Brennerleistung. Mit dem Zündbrenner 47 wird nach ausreichender Vorwärmung des Brenners das austretende Kohlestaub/Luftgemisch gezündet. Beim Zünder, wird die Zuteileinrichtung, d. h. die Brennstoffdosierung, bis an die stöchiometrischen Bedingungen im Sekundärbereich, also in derzweiten Verbrennungsstufe, nachgeregelt. Das Hochfahren des Brenners kann dann vorteilhafterweise mit der gleichen Luftmengenverteilung wie beim Dauerbetrieb erfolgen. Es erleichtert die Brennerführung wesentlich.

Teillast wird über die Kohlestaubdosierung und die Tertiärluftregelung gefahran.

In dieser Weise wird der Brenner auch betrieben, wenn statt Anthrazitkohle mit einem flüchtigen Gehalt von weniger als 10% Koks eingesetzt wird. Der Betrieb mit Koks ist sogar insofern leichter, als Staub mit größeren Partikeln bis zu 0,15 mm eingesetzt werden kann.

Der erfindungsgemäße Brenner eignet sich besonders für Industrie kessel, zur Fernwärmeerzeugung, für Brennkammern der Zementindustrie und andere industrielle Brennöfen. Er kann sowohl als Decken- wie auch als Frontbrenner eingesetzt werden. Durch die mögliche Einflußnahme auf die Flammengeometrie bietet sich der Brenner insbesondere für kurze Brennkammern an. Ferner ist er durch seine Eigenkühlung auch in ungekühlten Brennkammern einsetzbar und eignet er sich in besonderer Weise für eine Baukastenbauweise.

## Patentanspruch

Topfbrenner zur Verfeuerung von Kohlenstaub in einem mit keramischer Masse ausgekleideten, topfförmigen Brennraum und mit zentrischer, geradliniger Staubeinblasung und konzentrischer Luftzuführung, wobei die Luft beim Durchströmen des Brennraummantels vorgewärmt wird und in den Brennraum verdrallt eintritt, dadurch gekennzeichnet, daß zur Erzeugung einer Brennerleistung von 0,5—10 MW Anthrazit mit einer Korngröße von maximal 0,05 mm oder Kokskohle von maximal 0,15 mm mit einem Wassergehalt von höchstens 2% eingesetzt wird, daß die Magerkohle beim Eintritt eine Vorwärmung von 100—200°C aufweist, daß die Verbrennung unterhalb des Schlackenerweichungspunktes erfolgft und daß Luft um den Kohlenstaub-Luftstrahl spiralförmig herum geblasen wird.

## Revendication

Brûleur destiné à la combustion de charbon pulvérisé dans une chambre de combustion en forme de pot, revêtue d'une masse céramique, et comprenant une injection du matériau pulvérisé centrée, linéaire, et une amenée d'air concentrique, l'air étant préalablement chauffé au cours de son passage à travers l'envellope de la chambre de combustion et pénétrant sous une forme torsadée dans la chambre de combustion, caractérisé en ce que, pour produire une puissance de brûleur de 0,5 à 10 MW, de l'anthracite présentant une dimension granulaire de 0,05 mm au maximum ou du charbon à coke d'au maximum 0,15 mm avec une teneur en eau d'au maximum 2% est mis en oeuvre, en ce que le charbon maigre présente, lors de l'entrée, un chauffage préalable à 100—200°C, en ce que la combustion a lieu en dessous du point de ramollissement des scories et en ce que de l'air est soufflé en forme de spirale autour du jet d'air-charbon pulvérisé.

## Claim

Pot burner for combustion of coal dust in a pot-shaped combustion chamber lined with a ceramic mass, and with central, rectilinear injection of dust and concentric supply of air, wherein the air is preheated during flow through the combustion chamber casing, and enters the combustion chamber while whirling, characterised in that, for production of a burner output of 0.5—10 MW, there is supplied anthracite with a grain size of 0.05 mm maximum or coking coal of 0.15 mm maximum with a water content of 2% at most, that the non-bituminous coal has a pre-heating of 100—200°C at entry, that the combustion occurs below the slag softening point and that air is blown spirally around the stream of coal dust and air.

0 005 714

FIG. 1

FIG. 2

FIG.4

FIG.5

## FIG. 3